# EUROPÄISCHE PATENTSCHRIFT

(11) **EP 4 430 011 B1**
(45) Veröffentlichungstag und Bekanntmachung des Hinweises auf die Patenterteilung: **21.01.2026**
(21) Anmeldenummer: 22818222.6
(22) Anmeldetag: 11.11.2022
(51) Int. Cl.: C04B 7/44, C04B 7/47, F27B 7/20

(54) **ANLAGE ZUR HERSTELLUNG FÜR ZEMENTKLINKER IM OXY-FUEL-VERFAHREN, VERFAHREN ZUM BETRIEB EINER ANLAGE ZUR HERSTELLUNG VON ZEMENTKLINKER UND VERWENDEN VON REZIRKULATIONSGAS AUS EINER ANLAGE ZUR HERSTELLUNG VON ZEMENTKLINKER**
PLANT FOR THE PRODUCTION OF CEMENT CLINKER USING THE OXY-FUEL PROCESS, METHOD FOR OPERATING A PLANT FOR THE PRODUCTION OF CEMENT CLINKER AND USING RECIRCULATION GAS FROM A PLANT FOR THE PRODUCTION OF CEMENT CLINKER
INSTALLATION DE PRODUCTION DE CLINKER DE CIMENT UTILISANT LE PROCÉDÉ OXY-COMBUSTIBLE, PROCÉDÉ DE FONCTIONNEMENT D'UNE INSTALLATION DE PRODUCTION DE CLINKER DE CIMENT ET UTILISANT LE GAZ DE RECIRCULATION D'UNE INSTALLATION DE PRODUCTION DE CLINKER DE CIMENT

(30) Priorität: 11.11.2021 DE 102021129323
(43) Veröffentlichungstag der Anmeldung: 18.09.2024
(73) Patentinhaber: KHD Humboldt Wedag GmbH, 51149 Köln (DE)
(72) Erfinder: MERSMANN, Matthias, 52222 Stolberg (DE)
(86) Internationale Anmeldenummer: PCT/EP2022/081629
(87) Internationale Veröffentlichungsnummer: WO 2023/084028

(56) Entgegenhaltungen:
- EP-A1- 2 922 800
- CN-A- 109 312 984
- US-A1- 2007 278 333

## Beschreibung

Die Erfindung betrifft eine Anlage zur Herstellung für Zementklinker im Oxy-Fuel-Verfahren, aufweisend eine Fördervorrichtung zur Förderung von Schüttgut, wobei die Fördervorrichtung eine Verbindung mit der Anlage zur Herstellung von Zementklinker aufweist, in welcher zu transportierendes Schüttgut in die Anlage zur Herstellung von Zementklinker übergeht, dadurch gekennzeichnet, dass die Fördervorrichtung eine weitere Verbindung mit der Anlage zur Herstellung von Zementklinker eine Gaszufuhr zur Beaufschlagung mit Rezirkulationsgas aufweist. Die Erfindung betrifft weiterhin ein Verfahren zum Betrieb einer Anlage zur Herstellung von Zementklinker und die Verwenden von Rezirkulationsgas aus einer Anlage zur Herstellung von Zementklinker.

Zur Herstellung von Zementklinker wird kalkhaltiges Gestein zusammen mit Silikathaltigem Gestein zunächst zu Rohmehl vermahlen und in einer Anlage zur Herstellung von Zementklinker einer Wärmebehandlung in einem Flugstromreaktor in einer Atmosphäre aus stickstoffreicher Verbrennungsluft unterzogen. Bei der Wärmebehandlung wird aus dem kalkhaltigen Gestein formell Kohlendioxid (CO₂) aus dem im Kalk enthaltenen Carbonat (CO₃²⁻) getrieben. Durch diese Wärmebehandlung entsteht Kohlendioxid (CO₂) aus zwei Quellen, nämlich aus der Verbrennung von Brennstoffen, gleich ob regenerativ oder fossil, und durch das Austreiben des Kohlendioxids (CO₂) aus dem Kalk (CaCO₃). Um die Kohlendioxid-Emission in die freie Atmosphäre zu verringern, ist man dazu übergegangen, erste Anlagen stickstofffrei oder zumindest stickstoffarm zu betreiben und als Trägergas Kohlendioxid (CO₂) einzusetzen. Dabei verändert sich die Feststoffchemie und die Wärmebilanz dieser Anlage. Ziel der stickstofffreien bzw. stickstoffarmen, jedoch kohlendioxidreichen Herstellung von Zementklinker ist es, das Kohlendioxid (CO₂) in unterirdische Kavernen zu verpressen. Die Stickstoffarmut des zu verpressenden, kohlendioxidreichen Abgases erspart erhebliche Kompressionsarbeit.

Zur Bereitstellung eines möglichst hoch an Kohlendioxid (CO₂) angereicherten Abgas aus einer Anlage zur Herstellung von Zementklinker kann diese in einem sogenannten Oxyfuel-Verfahren betrieben werden. Dabei wird das kohlendioxidangereicherte Abgas dieser Anlage größtenteils rezirkuliert und mit einem für die Verbrennungsprozesse notwendigen Sauerstoff (O₂) angereichert. Die Zielsetzung ist dabei, ein Gasgemisch aus möglichst ausschließlich Kohlendioxid (CO₂) und Wasserdampf (H₂O) zu erzeugen, und insbesondere den als Kontamination zu bewertenden Stickstoff (N₂) zu minimieren. In diesem Sinne ist das Eindringen von atmosphärischer Luft aus der Umgebung in die im Unterdruck betriebene Anlage schädlich. Der übliche Falschluftanteil im Abgas einer Klinkerofenlinie hinter Wärmetauscher liegt zwischen 15% bei einer ordnungsgemäß installierten Neuanlage und bis zu 30% bei einer Altanlage. Ein nicht unerheblicher Anteil der atmosphärischen Luft gelangt in das Ofensystem über die Mehlaufgabe, da zum einen die dort verwendeten Transport- und Dosiervorrichtungen nur unvollständig gegen die atmosphärische Umgebungsluft abgedichtet werden können und zum anderen auch innerhalb feinen Schüttgutstroms ein hoher Porenvolumenanteil vorhanden ist, der mit atmosphärischer Luft gefüllt ist.

Nach der Lehre der US-Patentanmeldung US 2007/278333 A1 wird ein Verfahren zur Herstellung von Zementklinker offenbart. Dabei soll ein Sulfatträger als Teil des Ausgangsmaterials separat vom restlichen Ausgangsstoff zunächst getrocknet und dehydratisiert werden und danach in einer Walzenmühle einzeln zu einer mehlartigen Konsistenz zerkleinert werden. Der Transport von der Anlage zur Trocknung und Dehydratisierung solle pneumatisch erfolgen. Dabei wird atmosphärisches Trägergas aus einer Walzenmühle nach Entstaubung in diese teilweise zurückgeführt.

In der chinesische Patentanmeldung CN 109 312 984 A wird ein Calcinator als Flugstromreaktor beschrieben, in dem verschiedene "Behandlungsbereiche" vorhanden in, in denen Wärme produziert wird. Der Flugstromreaktor weise eine Leitung auf, die den Reaktor selbst darstellt.

In der europäischen Patentanmeldung EP 2 922 800 A1 wird die Trocknung von feuchtem Abfall in der Abluft eines Kühlers einer Anlage zur Herstellung von Zementklinker offenbart. Dabei wird der feuchte Abfall in einem Flash-Calcinator ähnlichem Flugstromreaktor mit der Abluft des Klinkerkühlers getrocknet.

Der Erfindung liegt die Aufgabe zugrunde, das Eindringen von Falschluft durch die Rohmehlaufgabe zu verhindern.

Die erfindungsgemäße Aufgabe wird gelöst durch eine Anlage mit den Merkmalen nach Anspruch 1. Weitere vorteilhafte Ausgestaltungen sind in den Unteransprüchen zu Anspruch 1 angegeben. In den Ansprüchen 4 und 5 werden ein Verfahren zum Betrieb einer Anlage aufweisend eine solche Fördervorrichtung beansprucht und die Verwendung von Rezirkulationsgas zum Betrieb einer pneumatischen Fördervorrichtung.

Nach dem Gedanken der Erfindung ist vorgesehen, dass die Fördervorrichtung eine weitere Verbindung mit der Anlage zur Herstellung von Zementklinker eine Gaszufuhr zur Beaufschlagung mit Rezirkulationsgas aufweist. Diese Gaszufuhr verdrängt etwaige atmosphärische Luft beim Übergang des zu fördernden Schüttguts beim Übergang in die Anlage zur Herstellung von Zementklinker.

Um die Menge des geförderten Schüttguts zu kontrollieren, kann vorgesehen sein, dass die Fördervorrichtung eine Regelvorrichtung aufweist, die in Abhängigkeit der Strömungsgeschwindigkeit des pneumatisch geförderten Schüttguts die Menge der Gaszufuhr einstellt, wobei sich die Gaszufuhr mit geringerer Strömungsgeschwindigkeit des pneumatisch geförderten Schüttguts erhöht und mit höherer Geschwindigkeit des pneumatisch geförderten Schüttguts verringert.

Die Erfindung wird anhand der folgenden Figuren näher erläutert.

Es zeigt:

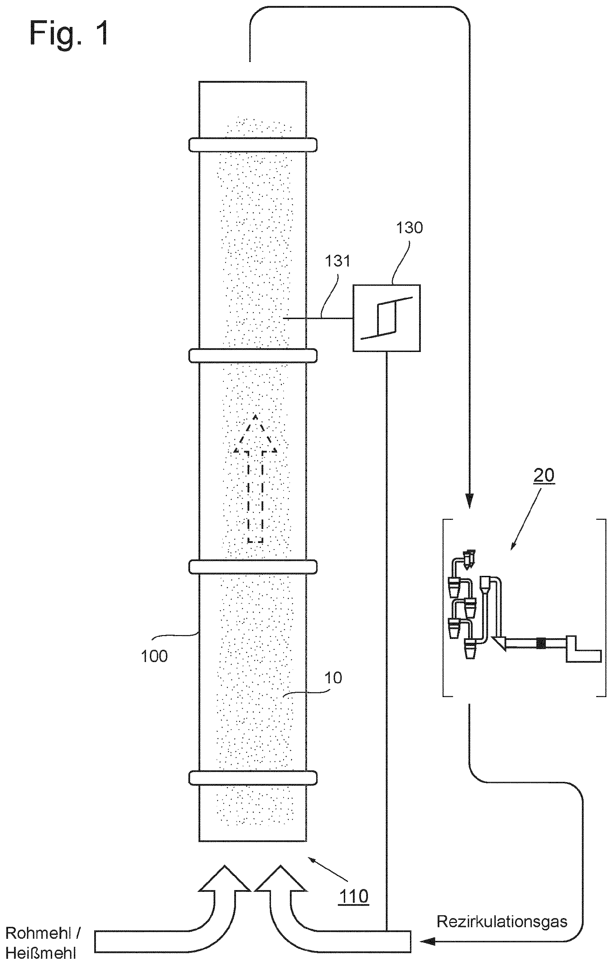

- Fig. 1: eine erste Ausgestaltung der erfindungsgemäßen Fördervorrichtung,

In **Figur 1** ist eine Skizze einer Ausgestaltung der Fördervorrichtung dargestellt. Es handelt sich bei dieser Ausgestaltung der Fördervorrichtung 100 um eine pneumatische Hebevorrichtung, die Schüttgut 10 mit Hilfe eines Gasstroms aus Rezirkulationsgas vertikal oder zumindest mit einer vertikalen Komponente nach oben befördert. Anstelle von atmosphärischer Luft wird Rezirkulationsgas in den unteren Bereich als Verbindung 110 der pneumatischen Hebevorrichtung als Fördervorrichtung 100 mit der Anlage 20 zur Herstellung von Zementklinker aufgegeben. Eine Regelvorrichtung 130 kann über einen Sensor 131 die Strömungsgeschwindigkeit in der pneumatischen Hebevorrichtung detektieren und davon abhängig die Gaszufuhr regeln. Die Strömungsgeschwindigkeit sinkt mit der Aufgabe des zu transportierenden Schüttguts. Sinkt die Strömungsgeschwindigkeit in der pneumatischen Hebevorrichtung, so muss mehr Gas zum pneumatischen Fördern in die pneumatische Fördervorrichtung gegeben werden, um die Strömungsgeschwindigkeit aufrecht zu erhalten. Steigt die Strömungsgeschwindigkeit hingegen, so ist das ein Maß dafür, das weniger Schüttgut gehoben wird. Um die Strömungsgeschwindigkeit wieder zu senken, kann daher weniger Gas in die pneumatische Hebevorrichtung gelassen werden.

### BEZUGSZEICHENLISTE

| | | | |
|---|---|---|---|
| 10 | Schüttgut | 130 | Regelvorrichtung |
| 20 | Anlage | 131 | Sensor |
| 100 | Fördervorrichtung | | |
| 110 | Verbindung | | |

## Patentansprüche

1. Anlage (20) zur Herstellung für Zementklinker im Oxy-Fuel-Verfahren, aufweisend
- eine Fördervorrichtung (100) zur Förderung von Schüttgut (10), wobei die Fördervorrichtung (100) eine Verbindung (110) mit der Anlage (20) zur Herstellung von Zementklinker aufweist, in welcher zu transportierendes Schüttgut (10) in die Anlage (20) zur Herstellung von Zementklinker übergeht,
wobei
die Fördervorrichtung (100) eine weitere Verbindung mit der Anlage (20) zur Herstellung von Zementklinker eine Gaszufuhr zur Beaufschlagung mit Rezirkulationsgas aufweist.

2. Anlage nach Anspruch 1,
**dadurch gekennzeichnet, dass**
dass die Fördervorrichtung (100) eine pneumatische Hebevorrichtung ist.

3. Anlage nach einem der Ansprüche 1 oder 2,
**dadurch gekennzeichnet, dass**
die Fördervorrichtung (100) eine Regelvorrichtung (130) aufweist, die in Abhängigkeit der Strömungsgeschwindigkeit des pneumatisch geförderten Schüttguts (10) die Menge der Gaszufuhr einstellt,
wobei sich die Gaszufuhr mit geringerer Strömungsgeschwindigkeit des pneumatisch geförderten Schüttguts (10) erhöht und mit höherer Geschwindigkeit des pneumatisch geförderten Schüttguts (10) verringert.

4. Verfahren zum Betrieb einer Anlage (20) zur Herstellung von Zementklinker, wobei die Anlage (20) zur Herstellung für Zementklinker im Oxy-Fuel-Verfahren arbeitet, und
wobei die Anlage (20) zur Herstellung für Zementklinker mindestens eine pneumatische Fördervorrichtung (100) für Schüttgut aufweist,
wobei
Beaufschlagen der pneumatischen Fördervorrichtung (100) mit Rezirkulationsgas.

5. Verwenden von Rezirkulationsgas aus einer Anlage (20) zur Herstellung von Zementklinker,
wobei die Anlage (20) zur Herstellung für im Oxy-Fuel-Verfahren arbeitet, zum Betrieb einer pneumatische Fördervorrichtung (100).

## Claims

1. Plant (20) for the production of cement clinker in the oxy-fuel process, comprising
- a conveying device (100) for conveying bulk material (10), wherein the conveying device (100) has a connection (110) to the plant (20) for the production of cement clinker, in which connection bulk material (10) to be transported is transferred to the plant (20) for the production of cement clinker,
wherein the conveying device (100) has a further connection to the plant (20) for the production of cement clinker, a gas supply for application with recirculation gas.

2. Plant according to Claim 1,
**characterized in that**
the conveying device (100) is a pneumatic lifting device.

3. Plant according to either of Claims 1 to 2,
**characterized in that**
the conveying device (100) has a closed-loop control device (130) which, depending on the flow velocity of the pneumatically conveyed bulk material (10), sets the amount of the gas supply,
wherein the gas supply increases with a lower flow speed of the pneumatically conveyed bulk material (10) and decreases with a higher speed of the pneumatically conveyed bulk material (10).

4. Method for operating a plant (20) for the production of cement clinker, wherein the plant (20) for the production of cement clinker operates in the oxy-fuel process, and
wherein the plant (20) for the production of cement clinker has at least one pneumatic conveying device (100) for bulk material,
wherein recirculation gas is applied to the pneumatic conveying device (100).

5. Use of recirculation gas from a plant (20) for the production of cement clinker,
wherein the system (20) for the production operates in the oxy-fuel process, for the operation of a pneumatic conveying device (100).

## Revendications

1. Installation (20) de fabrication de clinker de ciment selon le procédé oxy-combustible, présentant
- un dispositif de transport (100) pour transporter un produit en vrac (10), le dispositif de transport (100) présentant une liaison (110) avec l'installation (20) de fabrication de clinker de ciment, dans laquelle le produit en vrac (10) à transporter est transféré dans l'installation (20) de fabrication de clinker de ciment, le dispositif de transport (100) présentant une autre liaison avec l'installation (20) de fabrication de clinker de ciment pour une amenée de gaz afin pour l'application d'un gaz de recirculation.

2. Installation selon la revendication 1,
caractérisée en ce
le dispositif de transport (100) est un dispositif de levage pneumatique.

3. Installation selon l'une quelconque des revendications 1 ou 2,
caractérisée en ce
le dispositif de transport (100) présente un dispositif de régulation (130) qui règle la quantité d'amenée de gaz en fonction de la vitesse d'écoulement du produit en vrac (10) transporté pneumatiquement,
l'amenée de gaz augmentant lorsque la vitesse d'écoulement du produit en vrac (10) transporté pneumatiquement diminue et diminuant lorsque la vitesse d'écoulement du produit en vrac (10) transporté pneumatiquement augmente.

4. Procédé pour faire fonctionner une installation (20) de fabrication de clinker de ciment, l'installation (20) fonctionnant selon le procédé oxy-combustible pour la fabrication de clinker de ciment, et
l'installation (20) de fabrication de clinker de ciment présentant au moins un dispositif de transport pneumatique (100) pour un produit en vrac,
un gaz de recirculation étant appliqué au dispositif de transport pneumatique (100).

5. Utilisation d'un gaz de recirculation provenant d'une installation (20) de fabrication de clinker de ciment,
l'installation (20) de fabrication fonctionnant selon le procédé oxy-combustible, pour faire fonctionner un dispositif de transport pneumatique (100).
